Europäisches Patentamt

European Patent Office

Office européen des brevets

(19)

(11) Publication number: **0 220 061**
**A2**

(12) **EUROPEAN PATENT APPLICATION**

(21) Application number: **86308011.5**

(22) Date of filing: **15.10.86**

(51) Int. Cl.⁴: **G 11 B 7/24**

(30) Priority: **16.10.85 US 787862**

(43) Date of publication of application:
**29.04.87 Bulletin 87/18**

(84) Designated Contracting States:
**AT BE CH DE ES FR GB GR IT LI NL SE**

(71) Applicant: **RAYCHEM CORPORATION**
**300 Constitution Drive**
**Menlo Park California 94025 (US)**

(72) Inventor: **Ritchie, Ian Thomas**
**937 - 12th St. Apt. 209**
**Santa Monica California 90403 (US)**

(74) Representative: **Jay, Anthony William et al**
**Raychem Limited Intellectual Property Law Department**
**Faraday Road**
**Dorcan Swindon SN3 5HH Wiltshire (GB)**

(54) Optical recording coating.

(57) An optical data storage coating includes a cermet structure, the cermet including metal particles disposed in a dielectric matrix, both the metal particles and dielectric matrix being formed of stable, high melting point materials preferably deposited on a substrate by sputtering.

**Description**

## OPTICAL RECORDING COATING

The present invention relates to the formation of a coating having a cermet structure and devices usable therewith, preferred uses being for optical data recording.

It is known that data can be recorded by selectively illuminating a material so as to selectively change a reflectance of specific portions of the material, such illumination being done using high powered lasers. To read the data, the material is later illuminated with a low powered laser, and differences in reflection from various bits of the material are detected as either a "l" or a "0".

Materials used for this purpose suffer several drawbacks since relatively high power densities are often required to change a reflectance of a portion of the material sufficiently to obtain a desired signal-to-noise ratio upon reading. In addition, such materials are often environmentally unstable, and therefore require the use of additional protective layers thereover. Furthermore, such materials have also proved difficult to make in a controlled fashion, and hence are relatively expensive.

An example of a known optical recording material or substrate is described by Chao "New Media Development at Burroughs: Material and Coating", Optical Data Storage, SPIE Vol. 382, pages l49-l56. According to this reference, a tri-layer structure is formed which is composed of a reflective mirror layer over which is disposed a quarter wave length dielectric spacer layer over which is disposed a very thin metal absorber layer over which is disposed a thick overcoat protective layer. A preferred example for the metal absorber layer is gold. The gold is deposited in such a way so as to control its thin film microstructure such that the microstructure can be altered by laser heating to form an aggregated discontinuous structure whose reflectivity changes subsequent to being heated. Jipson, "The Writing Mechanism for Discontinuous Metal Films", Optical Storage Media, SPIE Vol. 420, pages 344-48, describes a mechanism by which a reflectivity of a metal absorber layer disposed on a PMMA substrate is changed by laser heating.

Substrates and coatings of the type described and analyzed by these two references are disadvantageous since optical, chemical, and mechanical properties of the metal coating layer are difficult to control during manufacture. Specifically, though the thickness of the metal layer can be varied to vary its absorption, reflection, and transmission, these variables cannot be independently controlled for any given metal to obtain optimum writing recording thresholds or optimum signal-to-noise ratios upon reading. In addition, since metals are excellent heat conductors, metal coatings are disadvantageous since relatively high writing powers are required to locally change the reflectance of the metal coating due to the metal's tendency to rapidly disperse heat over a wide area.

Accordingly, it is an object of the present invention to provide an optical recording coating and a recording device carrying such a coating, which does not have the above-noted drawbacks.

One aspect of the invention provides an optical recording coating for recording data, comprising:

A cermet optical storage layer disposed on a substrate, the layer comprising metal particles dispersed in a solid dielectric matrix, the metal particles comprising a first material selected from gold, silver, nickel, copper, platinum, palladium, rhodium and combinations thereof, and the dielectric matrix comprising a second material selected from the group consisting of $SiO_2$, $SnO_2$, $In_2O_3$, $GeO_2$, $TiO_2$, $Ta_2O_5$, $ZnO$, $ZrO_2$, $Y_2O_3$, $CdO$, $Si_3N_4$, $TiN$ and other transition metal nitrides and combinations thereof, the layer being constructed such that its reflectance can be selectively changed to store information in the layer by selectively illuminating the layer with high powered light. Recording coatings according to this invention can be made with a relatively low recording threshold, and/or improved environmental stability and/or advantageously "tailored" optical, mechanical, and chemical characteristics.

For example the coating may comprise a cermet which includes a layer of metal particles dispersed in a solid dielectric matrix, preferably a ceramic, the metal particles and dielectric matrix being co-deposited on a substrate, preferably made of a polymer, the coating being formulated such that upon being illu minated by high powered light a localized optical reflectance of the coating changes so as to be capable of recording data therein. In particular, the metal particles of the cermet are selected from the specified group of metals having relatively high melting points, and the dielectric or ceramic material is one of the specified group which also has a relatively high melting point. In other words, the invention may comprise forming the cermet by taking metal particles which themselves have a relatively high melting point and dispersing them in a ceramic matrix which also has a relatively high melting point.

One preferred method of forming the optical coating of the invention is by sputtering, and preferably reactive sputtering, using a sputtering target cathode comprising a metal to be deposited in a sputtering chamber including the target having therein an ionizable inert gas, such as argon, and other gases capable of forming a dielectric matrix of the cermet during the sputtering process. By applying a high voltage differential between an anode and the cathode target, the target metal is co-deposited on the substrate with the dielectric matrix, with partial pressures of the gases to be incorporated in the dielectric matrix being carefully controlled during the sputtering process so as to vary and optimize the properties of the coating so formed.

The invention, also provides a novel optical recording device includes a cermet structure layer disposed on a surface of a polymer layer, with the cermet layer being constructed such that its reflectance from a source to a detector, both relatively fixed in space, substantially and permanently changes subsequent to illuminating the layer with high power light, such as can be supplied from a high powered laser, preferred embodiments including the use of a semiconducting laser. The change in reflectance can be used to denote either an on or an off state, e.g. a "I" or a "0", with little or no change in reflectance denoting the converse. Hence, to write information on such a device, successive portions of the layer are illuminated with a high powered laser appropriately modulated such that selective bits of the layer undergo a change in reflectance. To read the information, the device is later illuminated with a low powered laser, and reflection intensities from successive bits of the layer are detected, with a high reflectance denoting either the I or the 0, and a low reflectance conversely indicating either the 0 or the I.

A particularly preferred embodiment of the invention comprises a cermet consisting essentially of gold particles dispersed in a silicon dioxide ceramic matrix this embodiment being advantageous since gold is an extremely stable metal and silicon dioxide is also an extremely stable material, thus resulting in an optical recording coating which is highly stable in nature and hence long lasting.

The change in reflectance of the coatings of this invention induced by the high powered laser is believed to be the result of the cermet layer changing in structure due to the heat absorbed therein which seems to result in the metal particles at least partially agglo merating. It is desirable that the substrate be made of a material which does not unduly retard or inhibit the desired agglomeration of the metal particles.

Substrates to which the layer is applied preferably have a smooth surface, and in general preformatting structure on the substrate is included to help identify where the data is contained, the preformatting structure being non-uniform and being much larger in size than a laser spot diameter used in writing or reading. Also, the surface of the substrate exclusive of the preformatting structure can be non-uniform by using a fine textured structure, wherein "bumps" defined by the textured structure are significantly smaller than the laser spot diameter.

Since during reading an optical detector essentially remains fixed in space relative to an optical source (the low powered laser) and the layer I4, a change in the direction of the reflectance of the cermet layer is interpreted as a decrease in reflection. Metal particle agglomeration and substrate deformation are both capable of changing a direction of the reflectance of the cermet layer. Since deformation of the substrate is a desirable phenomenon during writing it is preferable to dispose the cermet layer on a substrate having a relative low heat distortion point of approximately 130°C, possibly as high as 150°C, 200°C, or 220°C, since such relatively low heat distortion points of the substrate result in the substrate possibly being locally altered or deformed when the cermet layer is illuminated with a high light power density. Accordingly, preferred substrates of the invention include polymers, preferred embodiments comprising polycarbonate, acrylates, (e.g. PMMA), and polyester, though other high melting point substrates are possible where the substrate does not unduly retard or inhibit agglomeration of the metal particles.

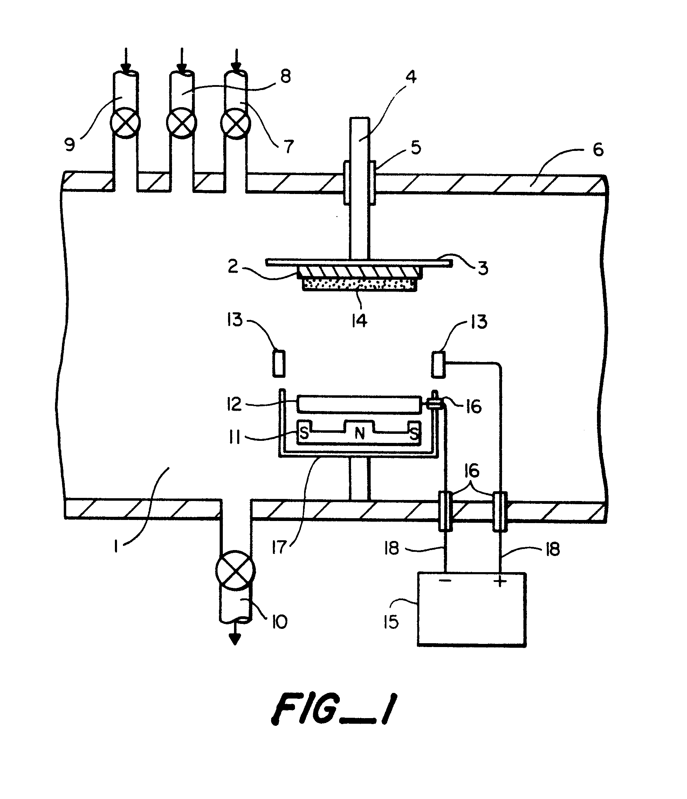

Coatings of the invention can be uniquely formed to provide a wide variety of desired optical, chemical, or mechanical properties by forming the coating on the substrate by reactive sputtering, one example of which will be described by reference to the accompanying drawing, Figure I.

Figure I illustrates a sputtering chamber I having a substrate 2 onto which the coating I4 is to be deposited, the coating I4 comprising a cermet which includes metal particles dispersed in a dielectric matrix. The metal particles originate from target I2, which comprises a cathode, and a voltage differential is maintained between an anode I3 and the target I2 to create a sputtering deposition process. A magnet II is utilized for confining ionized gases in a region of the target I2, the gases to be ionized being injected into the sputtering chamber I via any one of inlet ports 7-9. An outlet port I0 is provided for evacuating the sputtering chamber I. The dielectric matrix is co-deposited onto the substrate 2 with the metal particles from the target I2 so as to form the composite coating I4 by supplying appropriate gases to form the dielectric matrix via any one of the inlet ports 7-9. The gases so supplied are ionized and polymerized by the electric fields created within the sputtering chamber I and hence are co-deposited with the metal particles from the target I2 onto the substrate 2. Figure I further shows a substrate holder 3, 4, a seal 5 for sealing between the holder portion 4 and a wall 6 of the sputtering chamber I, a D.C. high voltage power source I5, insulation I6, a shielding box I7 disposed around the cathode I2, and electrical connection cables I8.

By appropriately selecting the gases which are to form the dielectric matrix and by appropriately controlling their partial pressures within the sputtering chamber I, any given layer composition I4 can be formed, and the formation thereof can be precisely controlled by measuring any one of a number of properties of the layer I4 as it is being deposited, and utilizing feedback control based upon such measurements. Hence, the reflectance, transmittance, and absorption of the layer I4 can be independently varied using information desired from such feedback so as to arrive at a combination of properties particularly desirable for a product's end use during product development and such properties can later be maintained constant using feedback control during actual manufacturing.

According to a preferred embodiment, the target I2 comprises a single metal material, and other elements constituting the layer I4 are supplied in gaseous form. Such an embodiment has advantages in ease of fabrication of the target I2, and the proportion of the metal particles in the cermet can be precisely controlled since the partial pressures of the gases introduced into the chamber I can be appropriately controlled as well as the electric field intensities within the chamber I. According to a preferred embodiment, oxygen constitutes one element which forms part of the dielectric matrix, and hence since it is not desired that the metal particles substantially react with the oxygen, the metal is chosen so as to have a free energy of oxide formation which is substantially lower than that of at least one of the gases in the chamber other than the oxygen. According to another embodiment, nitrogen is used rather than oxygen as part of the dielectric matrix.

To form the preferred cermet which comprises gold particles and a ceramic dielectric consisting essentially of silicon dioxide, a gold target can simply be sputtered in an atmosphere which includes oxygen and silicon, appropriate gases being silane and oxygen in addition to the inert gas used for bombarding the target. If the ceramic is to include a transition metal nitride instead of an oxide, nitrogen can be utilized in place of the oxygen, or alternatively a molecule containing nitrogen such as ammonia can be used.

The choice of any given metal and any given dielectric, and gases used to form these dielectrics, can be determined experimentally depending on the desired optical, chemical, and mechanical properties of the resultant coating desired, and the invention includes all combinations of the dielectrics and metals set forth above, and the use of all gases to form such dielectrics.

In addition, though a preferred embodiment is to utilize only a single metal since fabrication of the target l2 is thus simplified, it is conceivable that the coating could comprise more than one type of metal disposed in a dielectric matrix, and hence the target l2 could be formulated from or could comprise a mixture of various ones of the metals set forth above, the invention including all such modifications. Alternatively, the additional metals could be introduced into the chamber l in gaseous form.

By choosing the correct metal/dielectric ratio, it is possible to produce a coating that has low thermal conductivity and which also has both a high absorption and a high reflectance at various wavelengths commonly used for lasers, especially semiconducting lasers. In particular, it is possible to formulate coatings having a reflectance between 20% and 50% and an absorption likewise between 20% and 50%, preferred values of the reflectance and absorption being between 40% and 50%, and coatings having absorptions and reflectances between 35% and 45% are easily formulated, typical wave lengths for such values being approximately 830 nanometers, which is one preferred wavelength for known semiconducting lasers. However, it should be understood that preferred reflectances and absorptions can be obtained at other wavelengths as well by appropriately choosing the metal and dielectric materials and by appropriately controlling the metal/dielectric ratio. The thermal conductivity can be kept low so as to be within an order of magnitude of that of the ceramic, rather than of the metal particles, preferred embodiments having thermal conductivities of between one and three times that of the dielectric matrix alone.

Since sputtering is a preferred technique for formulating the coating, the thickness of the coating can be precisely controlled and can be maintained extremely thin. Typical thicknesses of coatings useful with the invention are between 500 and 2000 angstroms, though coatings outside this range could likewise be employed if desired. Increasing the coating thickness increases the absorption of the coating and decreases its transmittance. Moreover, the transmittance and absorption can be independently changed since the metal/dielectric ratio can be varied in addition to the coating thickness, and the thermoconductivity can be independently varied as well.

Furthermore, by depositing a reflective layer onto the substrate 2 prior to depositing the optical coating l4 thereon, a path length of light propagating through the coating l4 can be doubled, and hence the absorption of the layer l4 can likewise be doubled for any given thickness. Accordingly, a reflective layer can be used to decrease the required thickness of the coating l4 if desired. In addition, a further protective layer can be deposited over the coating l4 to increase environmental stability, but this is not essential if the metal/dielectric materials are appropriately chosen.

The invention also provides an optical recording device using the coating, and provides a method of forming an optical recording coating comprising the steps of:

disposing a target comprising a first material in a sputtering chamber;

disposing a substrate to be coated within the chamber, the substrate comprising a polymer;

injecting an inert gas into the chamber;

injecting at least one further gas into the chamber;

creating an electric potential between the target and an anode of sufficient strength to ionize the inert gas;

the first material and the nature and partial pressure of the said gas(es) being selected so as to form on the substrate when the electric potential is created a cermet optical storage layer comprising metal particles disposed in a solid dielectric matrix, the metal particles comprising a material selected from gold, silver, nickel, copper, platinium, palladium, rhodium and combinations thereof, and the dielectric matrix comprising a material selected from $SiO_2$, $SnO_2$, $In_2O_3$, $GeO_2$, $TiO_2$, $Ta_2O_5$, $ZnO$, $ZrO_2$, $Y_2O_3$, $CdO$, $Si_3N_4$, $TiN$ and other transition metal nitrides and combinations thereof.

This method of forming an optical coating may comprise the steps of sputtering a target having a single material therein while introducing various other materials comprising the coating into the sputtering chamber in a gaseous form. As previously indicated, by varying the partial pressures of the various gases within the sputtering chamber, the composition of the coating can be varied as desired, and the various coatings so formed can then be evaluated to determine their optical, chemical, and mechanical properties. In addition or alternatively, the sputtering power can be varied, e.g. either increased or decreased, to vary a rate at which the target is sputtered, thereby also varying the composition of the resultant coating layer. Hence, through experimentation, one can formulate an "optimum" coating having optimum properties for the end use desired.

Once the optimum composition of the coating is determined, one can then make the desired coating composition by using a target having more of the elements comprising the coating in mixture form thus alleviating the necessity of introducing as many component elements in gaseous form as is done when first developing the coating. Using a more complicated composite target is advantageous since some elements are inconvenient to work with in gaseous form due to toxicity problems, manufacturing costs, etc. With the invention, it is possible to make coatings exhibiting an adequate change of reflectance with energy levels as low as 4 nJ/um², as low as 3 nJ/um², and even as low as 2 nJ/um², with a change of reflectance in excess of 20 dB being obtainable with an energy level as low as 3 nJ/um².

Coatings and devices usable therewith have numerous applications according to the invention. Continuous substrate films can be coated according to the invention, and such films can then be cut into any appropriate shapes, such as those appropriate for recording disks or credit cards, or can be left in sheet or tape form if desired, the invention including all such ultimate embodiments. Also, discs and other various preshaped substrates can directly be coated.

The invention is further illustrated by the following specific examples.

Example I

An eighteen inch diameter stainless steel bell jar type vacuum chamber was fitted with a four inch diameter planar magnetron sputtering source, a substrate holder suitable for supporting three inch square substrates three inches from the source, and a shutter interspersed between the sputtering source and the substrate. The chamber was evacuated to a pressure of $1.8 \times 10^{-5}$ Torr, then backfilled with high purity argon gas to a pressure of $6.0 \times 10^{-3}$ Torr.

A gold target 99.9% pure, attached to the sputtering source, was sputter cleaned by applying D.C. power of 150 watts for approximately three minutes. The shutter remained closed during this operation so that no coating was deposited on the substrate.

The chamber was then reevacuated briefly, then backfilled to a partial pressure of $8.0 \times 10^{-4}$ Torr of high purity oxygen, $3.7 \times 10^{-3}$ Torr of high purity argon, and $6.6 \times 10^{-4}$ Torr of high purity silane gas. D.C. power of 154 watts at 429 volts and 0.319 amps was applied to the magnetron sputtering source, and the shutter was opened for a period of twenty seconds allowing a coating to be deposited onto a substrate of polyethylene terephthalate (PET) polyester film, three inches square, which had been fitted to the substrate holder.

The resulting coating had a reflectance of 0.40 for 820 nm wavelength light and an absorption of 0.41 for that wavelength of light.

Example 2

The same apparatus as described in Example I was used to produce another coating. The same target sputter cleaning procedure as described in Example I was also used.

The deposition conditions for this second coating were a partial oxygen pressure of $8.0 \times 10^{-4}$ Torr, a partial argon pressure of $3.7 \times 10^{-3}$ Torr and a partial silane pressure of $6.6 \times 10^{-4}$ Torr. D.C. power applied to the target was 150 watts, at 468V, 0.285A. A coating was deposited onto a PET polyester substrate for 20 seconds, and this coating had a reflectance for 820 nm wavelength light of 46% and an absorption at that wavelength of 36%.

Example 3

The same apparatus, cleaning procedure and deposition conditions described in Example 2 were used to make a third coating on a PET polyester film substrate, but the deposition time was increased to 30 seconds. This coating had an 820 nm reflectance of 37% and an absorption of 56%.

The reflectances and absorptions of all three coatings described above changed by less than 5% when they were exposed to an ambient laboratory environment, 80°C dry heat, and 60°C - 95% relative humidity heat, for over one hundred hours, indicting good environmental stability.

Though the invention has been mainly described with reference to manufacture by sputtering, in particular reactive sputtering, other deposition processes could be used as well.

**Claims**

1. An optical recording coating for recording data, comprising:
a cermet optical storage layer disposed on a substrate, the layer comprising metal particles dispersed in a solid dielectric matrix, the metal particles comprising a first material selected from gold, silver, nickel, copper, platinum, palladium, rhodium and combinations thereof, and the dielectric matrix comprising a second material selected from the group consisting of $SiO_2$, $SnO_2$, $In_2O_3$, $GeO_2$, $TiO_2$, $Ta_2O_5$, $ZnO$, $ZrO_2$, $Y_2O_3$, $CdO$, $Si_3N_4$, $TiN$ and other transition metal nitrides and combinations thereof, the layer being constructed such that its reflectance can be selectively changed to store information in the layer by selectively illuminating the layer with high powered light.

2. An optical recording device comprising a coating according to claim I in which data has been recorded by selectively illuminating the optical storage layer with high powered light.

3. A coating or device according to claim I or 2, wherein the cermet layer is such that its reflectance is substantially reduced by illumination by high powered laser light.

4. A method of forming an optical recording coating comprising the steps of:
disposing a target comprising a first material in a sputtering chamber;

disposing a substrate to be coated within the chamber, the substrate comprising a polymer:

injecting an inert gas into the chamber;

injecting at least one further gas into the chamber;

creating an electric potential between the target and an anode of sufficient strength to ionize the inert gas;

the first material and the nature and partial pressure of the said further gas(es) being selected so as to form on the substrate when the electric potential is created a cermet optical storage layer comprising metal particles disposed in a solid dielectric matrix, the metal particles comprising a material selected from gold, silver, nickel, copper, platinum, palladium, rhodium and combinations thereof, and the dielectric matrix comprising a material selected from $SiO_2$, $SnO_2$, $In_2O_3$, $GeO_2$, $TiO_2$, $Ta_2O_5$, ZnO, $ZrO_2$, $Y_2O_3$, CdO, $Si_3N_4$, TiN and other transition metal nitrides and combinations thereof.

5. A method according to claim 4, comprising the steps of:

varying the thickness of the cermet optical storage layer and/or varying the metal particle atomic fraction as well as the solid dielectric atomic fraction of the cermet optical storage layer so as to optimize the optical reflectance, optical absorptance, and thermal conductivity of the optical storage layer.

6. A method according to claim 4 or 5, wherein the metal particles and the ceramic matrix are simultaneously co-deposited by sputtering, preferably by reactive sputtering.

7. A method of optically recording data, comprising selectively exposing a coating or device according to claim I, 2 or 3 to laser light of sufficient power substantially to alter the reflectance of the exposed parts of the cermet layer.

8. A method of reading optically recorded data, comprising exposing a coating or device according to claim I, 2 or 3 upon which data has been recorded to laser light of sufficiently low power to leave the reflectance of the cermet layer substantially unaltered.

9. A coating, device or method according to any of the preceding claims, wherein the cermet layer is provided with a thickness between 500 and 2000 angstroms.

I0. A coating, device or method according to any of the preceding claims, wherein the substrate comprises a polymer having a heat distortion point below 220°C, preferably below 200°C, more preferably below I50°C.

II. A coating, device or method according to claim I0, wherein the said polymer is selected from polyesters, polycarbonates, and acrylates.

I2. A coating, device or method according to any of the preceding claims, wherein the cermet layer consists substantially only of gold particles in a $SiO_2$ matrix.

0220061

FIG_1